# EUROPÄISCHE PATENTSCHRIFT

(11) **EP 1 714 046 B1**
(45) Veröffentlichungstag und Bekanntmachung des Hinweises auf die Patenterteilung: **27.06.2007**
(21) Anmeldenummer: 05701349.2
(22) Anmeldetag: 04.02.2005
(51) Int. Cl.: F16D 48/06

(54) **VORRICHTUNG ZUR STEUERUNG VON FUNKTIONEN EINES MOBILFAHRZEUGS UND VERFAHREN ZUR STEUERUNG DIESER FUNKTIONEN**
DEVICE FOR CONTROLLING FUNCTIONS OF A MOBILE VEHICLE, AND METHOD FOR CONTROLLING SAID FUNCTIONS
DISPOSITIF POUR COMMANDER DES FONCTIONS D'UN ENGIN AUTOMOTEUR ET PROCEDE DE COMMANDE DESDITES FONCTIONS

(30) Priorität: 12.02.2004 DE 102004006790
(43) Veröffentlichungstag der Anmeldung: 25.10.2006
(73) Patentinhaber: ZF FRIEDRICHSHAFEN Aktiengesellschaft, 88038 Friedrichshafen (DE)
(72) Erfinder: LEGNER, Jürgen, 88048 Friedrichshafen (DE)
(86) Internationale Anmeldenummer: PCT/EP2005/001142
(87) Internationale Veröffentlichungsnummer: WO 2005/078304

(56) Entgegenhaltungen:
- DE-A1- 10 230 993
- DE-A1- 10 237 793
- US-A- 4 979 599

## Beschreibung

Die Erfindung betrifft eine Vorrichtung zur Steuerung von Funktionen eines Mobilfahrzeugs und ein Verfahren zur Steuerung dieser Funktionen nach der im Oberbegriff von Anspruch 1 und Anspruch 4 näher definierten Art.

Bei Mobilfahrzeugen, insbesondere Arbeitsmaschinen, wie beispielsweise Radladern, besteht die Forderung, auch bei betätigter Betriebsbremse und somit geringer Fahrgeschwindigkeit ausreichend Leistung für die Arbeitshydraulik abgreifen zu können.

Bei Arbeitsmaschinen, wie beispielsweise Radladern, treibt eine Antriebsmaschine einerseits über einen hydrodynamischen Drehmomentwandler und eine Kupplungsvorrichtung die Antriebsräder und andererseits direkt Verbraucher, wie beispielsweise hydraulische Pumpen, an, mittels welcher beispielsweise die Ladeschaufel des Radladers betätigt wird. Radlader verfügen über eine Steuerungsfunktion, durch welche zu Beginn des Ladebetriebs beim Betätigen der Betriebsbremse, welche auf die Fahrzeugräder wirkt, durch Abschalten des hydraulischen Betätigungsdrucks in einem hydraulischen, betätigbaren Kupplungsmittel die Fahrkupplung geöffnet wird. Durch das Öffnen der Fahrkupplung steht sodann die Motorleistung fast vollständig der Fahrzeughydraulik für die Betätigung der Kolbenzylinderanordnung der Ladeschaufel zur Verfügung. Dies ist vor allem dadurch bedingt, dass ohne diese Steuerungsfunktion bei zugeschaltetem Fahrantrieb und betätigter Fahrzeugbetriebsbremse eine sehr große Verlustleistung im Drehmomentwandler entsteht, da in diesem das Turbinenrad nahezu oder vollständig steht, während sich das durch den Antriebsmotor angetriebene Pumpenrad mit der sogenannten Festbremsdrehzahl dreht.

Die DE 102 30 993 A1 offenbart ein Verfahren zur Steuerung von Funktionen eines Arbeitsfahrzeugs, bei welchem ein Antriebsmotor über eine Fahrkupplung Fahrzeugräder antreibt und auf die Fahrzeugräder eine Betriebsbremse wirkt, und der Antriebsmotor eine Hydraulikpumpe antreibt, wobei die Fahrkupplung zwischen dem Antriebsmotor und den Antriebsrädern automatisch geöffnet und die Betriebsbremse automatisch geschlossen wird, wenn die auf die Antriebsvorrichtung des Fahrzeugs wirkende Last, beispielsweise das Gewicht der Ladeschaufel, eine voreingestellte Belastungsschwelle überschreitet oder überschreitend betätigt wird. Bei einem Radlader gibt es jedoch eine Vielzahl von Fahrsituationen, bei welchen es nicht immer wünschenswert ist, dass bei Überschreiten einer Last an der Arbeitsvorrichtung automatisch die Betriebsbremse und die Kupplungsvorrichtung im Öffnungssinne betätigt werden. Fährt beispielsweise der Radlader bei der Beschickung einer Brech- oder Sortieranlage eine Rampe zur Entladestelle hoch, so besteht die Möglichkeit, dass der Radlader beim Betätigen des Arbeitsgeräts abgebremst wird, obwohl er seine Endstellung noch nicht erreicht hat. Ebenso besteht nach dem Stand der Technik die Möglichkeit, dass bei nicht verwendeter Automatik die Kupplungsvorrichtung im Öffnungssinne betätigt wird, wenn die Betriebsbremse noch nicht ausreichend geschlossen ist, was zu einem Zurückrollen des Fahrzeugs auf der Rampe führt.

Der vorliegenden Erfindung liegt die Aufgabe zugrunde, eine Vorrichtung zur Steuerung von Funktionen eines Mobilfahrzeugs und ein Verfahren zur Steuerung dieser Funktionen zu schaffen, bei welchen eine Kupplungsvorrichtung, welche zwischen der Antriebsmaschine und den Fahrzeugrädern angeordnet ist, im Öffnungssinne betätigbar ist, um Verbrauchern ausreichend Leistung zur Verfügung zu stellen und hierbei die unterschiedlichen Fahrsituationen des Fahrzeugs mitzuberücksichtigen.

Die Aufgabe wird mit einer, auch die kennzeichnenden Merkmale des Hauptanspruchs aufweisenden Vorrichtung zur Steuerung von Funktionen eines Mobilfahrzeugs sowie einem Verfahren zur Steuerung von Funktionen eines Mobilfahrzeugs gelöst.

Erfindungsgemäß treibt die Antriebsmaschine einen Verbraucher und über eine Kupplungsvorrichtung Antriebsräder an. Es sind Mittel zur Bestimmung des Eingangsdrehmoments in die Kupplungsvorrichtung vorhanden, welche beispielsweise in Form einer elektronischen Steuereinheit ausgeführt sind, welche bei Vorhandensein eines hydrodynamischen Drehmomentwandlers zwischen der Antriebsmaschine und der Kupplungsvorrichtung aus den ermittelten Drehzahlen, insbesondere der Pumpendrehzahl sowie der Turbinendrehzahl, des hydrodynamischen Drehmomentwandlers und aus einer Drehzahldrehmomentkennlinie des Wandlers das Eingangsdrehmoment in die Kupplungsvorrichtung ermittelt. Zusätzlich sind Mittel zur Ermittlung des Verzögerungswunsches vorhanden, welche beispielsweise als Drehwinkelgeber am Bremspedal oder als Drucksensoren in den Bremsleitungen ausgebildet sein können. Die Kupplungsvorrichtung wird nun im Öffnungssinne dann betätigt, wenn ein zuvor definierter Verzögerungswunsch und ein zuvor definiertes Drehmoment erreicht ist.

In einer weiteren Ausgestaltungsform wird ein dem Bremspedal proportionales Signal einer elektronischen Steuereinheit zugeführt, welche bei Erkennen eines Bremssignals das Eingangsdrehmoment ermittelt, anschließend einen zu diesem Eingangsdrehmoment zuvor definierten Verzögerungswunsch bestimmt, welcher beispielsweise einer definierten Pedalposition entsprechen kann, und bei Erreichen dieses Verzögerungswunsches die Kupplungsvorrichtung im Öffnungssinne betätigt. Eine Veränderung des Eingangsdrehmoments zwischen dem ersten Betätigen des Bremspedals und dem Erreichen des zum öffnen der Kupplungsvorrichtung benötigten Verzögerungswunsches, beispielsweise eines ausreichenden Pedalsignals, bleibt unberücksichtigt.

Die Höhe des Eingangsdrehmoments beeinflußt den benötigten Verzögerungswunsch, um die Kupplungsvorrichtung im Öffnungssinne zu betätigen. Wird beispielsweise beim Betätigen des Bremspedals ein hohes Eingangsdrehmoment ermittelt, weil beispielsweise der Radlader eine Rampe hochfährt, so wird die Kupplungsvorrichtung erst dann im Öffnungssinne betätigt, wenn ein hoher Verzögerungswunsch erreicht ist, welcher beispielsweise einem fast vollständig durchgetretenen Bremspedal entspricht. Somit ist gewährleistet, dass die Kupplungsvorrichtung nicht zu früh öffnet, d. h., die Betriebsbremse noch nicht ausreichend geschlossen ist, wobei dieses Öffnen bei einem Fahrzeug, welches sich auf einer Rampe befindet, zum Zurückrollen des Fahrzeugs führen würde. Wird ein geringes Eingangsdrehmoment beim Betätigen der Betriebsbremse ermittelt, so öffnet die Kupplungsvorrichtung schon bei einem geringeren Verzögerungswunsch und somit bei einem geringen Pedalweg des Bremspedals. Vorzugsweise wird das Eingangsdrehmoment ermittelt, wenn das Bremspedal betätigt ist, jedoch die Betriebsbremse noch keinerlei Verzögerung bewirkt. Indem der Zusammenhang des Eingangsdrehmomens zum benötigten Verzögerungswunsch in einer elektronischen Steuereinheit abgelegt ist, wird die Kupplungsvorrichtung passend zu jeder Fahrsituation im richtigen Augenblick geöffnet.

Weitere Merkmale sind der Figuren-Beschreibung zu entnehmen.

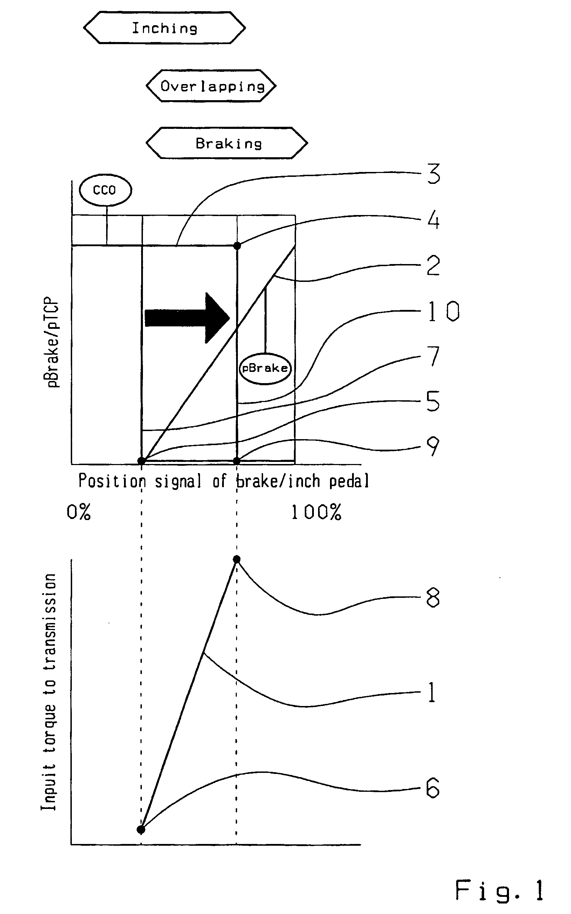

Die einzige Figur zeigt eine schematische Darstellung des Verfahrens zur Steuerung von Funktionen des Mobilfahrzeugs.

Mit der Linie 1 ist das ermittelte Eingangsdrehmoment an der Kupplungsvorrichtung dargestellt. Mit der Linie 2 ist der Bremsdruck, welcher auf die Betriebsbremse wirkt und somit ein Maß für die Fahrzeugverzögerung ist, dargestellt. Die Linie 3 stellt den Schließdruck der Kupplungsvorrichtung dar, wobei im Punkt 4 die Kupplungsvorrichtung im Öffnungssinne betätigt wird, was durch eine Reduzierung des Betätigungsdrucks auf die Kupplung sichtbar ist. Fährt nun beispielsweise ein Mobilfahrzeug und das Bremspedal wird betätigt, wie in Punkt 5 ersichtlich ist, so ermittelt eine elektronische Steuereinheit das Eingangsdrehmoment der Kupplungseinheit. Wird ein geringes Drehmoment ermittelt, wie in Punkt 6 ersichtlich ist, so öffnet die Kupplungsvorrichtung schon bei einem geringen Pedalweg, wie durch die Linie 7 ersichtlich ist. Wird ein hohes Drehmoment ermittelt, wie beispielsweise in Punkt 8 ersichtlich ist, so ist ein deutlich größerer Pedalweg notwendig, um die Kupplungsvorrichtung zu öffnen, wie durch den Punkt 9 und die Linie 10 ersichtlich ist. Somit ist gewährleistet, dass sich bei deutlich höherem Eingangsdrehmoment die Betriebsbremse in einem höheren Schließzustand befindet, um durch das Öffnen der Kupplungsvorrichtung ein Zurückrollen des Fahrzeugs zu verhindern.

### Bezugszeichen

- 1: Linie
- 2: Linie
- 3: Linie
- 4: Punkt
- 5: Punkt
- 6: Punkt
- 7: Linie
- 8: Punkt
- 9: Punkt
- 10: Linie

## Patentansprüche

1. Mobile Arbeitsmaschine mit einer Antriebsmaschine, welche einerseits direkt mit einem Verbraucher und andererseits über einen hydrodynamischen Drehmomentwandler und eine Kupplungsvorrichtung mit den Antriebsrädern in Wirkverbindung steht und mit Verzögerungsmitteln, mittels welchen die Antriebsräder des Fahrzeugs verzögerbar sind, und mit einer Vorrichtung zur Ermittlung eines Verzögerungswunsches, wobei in Abhängigkeit des Verzögerungswunsches die Kupplungsvorrichtung im Öffnungssinne oder im Schließsinne betätigt wird und mit Drehmomentbestimmungsmittel welche das Eingangsdrehmoment der Kupplungsvorrichtung bestimmen, mit einer Vorrichtung zur Steuerung von Funktionen der Arbeitsmaschine, **dadurch gekennzeichnet, dass** die Kupplungsvorrichtung in Abhängigkeit von diesem Eingangsdrehmoment und in Abhängigkeit von dem Verzögerungswunsch betätigt wird, wobei zum Betätigen der Kupplungsvorrichtung im Öffnungssinne bei niedrigerem Drehmoment ein geringerer Verzögerungswunsch ausreicht als bei höherem Drehmoment.

2. Mobile Arbeitsmaschine nach Anspruch 1, **dadurch gekennzeichnet, dass** zwischen der Kupplungsvorrichtung und der Antriebsmaschine der hydrodynamischer Drehmomentwandler mit einem Pumpenrad und einem Turbinenrad angeordnet ist, wobei das Eingangsdrehmoment aus der Drehzahl des Pumpenrades, der Drehzahl des Turbinenrades und der Drehzahldrehmomentkennlinie des hydrodynamischen Drehmomentwandlers bestimmt wird.

3. Mobile Arbeitsmaschine nach Anspruch 1, **dadurch gekennzeichnet, dass** der Verzögerungswunsch aus einer Stellung eines Bremspedals oder einem Bremsdruck bestimmt wird.

4. Verfahren zur Steuerung von Funktionen einer Mobilen Arbeitsmaschine nach Anspruch 1, **dadurch gekennzeichnet, dass** ein Verzögerungswunsch ermittelt wird und über Drehmomentbestimmungsmittel das Eingangsdrehmoment der Kupplungsvorrichtung bestimmt wird,
wobei die Kupplungsvorrichtung in Abhängigkeit von diesem Eingangsdrehmoment und in Abhängigkeit von dem Verzögerungswunsch betätigt wird, wobei zum Betätigen der Kupplungsvorrichtung im Öffnungssinne bei niedrigerem Drehmoment ein geringerer Verzögerungswunsch ausreicht als bei höherem Drehmoment.

5. Verfahren zur Steuerung von Funktionen nach Anspruch 4, **dadurch gekennzeichnet, dass** die Kupplungsvorrichtung oberhalb eines definierten Verzögerungswunsches und oberhalb eines definierten Eingangsdrehmoments im Öffnungssinne betätigt wird.

6. Verfahren zur Steuerung von Funktionen nach Anspruch 4, **dadurch gekennzeichnet, dass** das Eingangsdrehmoment bestimmt wird, wenn ein Verzögerungswunsch erkannt wird.

7. Verfahren zur Steuerung von Funktionen nach Anspruch 4, **dadurch gekennzeichnet, dass** bei niedrigem Eingangsdrehmoment die Kupplungsvorrichtung bei niedrigem Verzögerungswunsch und bei höherem Eingangsdrehmoment die Kupplungsvorrichtung bei größerem Verzögerungswunsch im Öffnungssinne betätigt wird.

8. Verfahren zur Steuerung von Funktionen nach Anspruch 4, **dadurch gekennzeichnet, dass** der Verzögerungswunsch proportional zu einem Bremspedalweg oder einem Bremsdruck ist.

9. Verfahren zur Steuerung von Funktionen nach Anspruch 4, **dadurch gekennzeichnet, dass** das Eingangsdrehmoment bei einem ersten Erkennen eines Verzögerungswunsches bestimmt wird, diesem Eingangsdrehmoment ein zuvor definierter Verzögerungswunsch zugeordnet wird, bei dessen Überschreiten die Kupplungsvorrichtung im Öffnungssinne betätigt wird.

10. Verfahren zur Steuerung von Funktionen nach Anspruch 9, **dadurch gekennzeichnet, dass** das erste Erkennen des Verzögerungswunsches vor dem Betätigen der Betriebsbremse erfolgt.

11. Verfahren zur Steuerung von Funktionen nach Anspruch 4, **dadurch gekennzeichnet, dass** ab einem definierten Verzögerungswunsch eine Betriebsbremse betätigt wird.

## Claims

1. Mobile industrial machine with a prime mover, which is actively connected on the one hand to a consumer directly and on the other to the driving wheels via a hydrodynamic torque converter and a clutch device, and with deceleration means by means of which the driving wheels of the vehicle can be decelerated, and with a device for establishing a deceleration demand, wherein the clutch device is operated in the disengaging sense or in the engaging sense in accordance with the deceleration demand, and with torque determination means which determine the input torque of the clutch device, with a device for controlling functions of the industrial machine, **characterised in that** the clutch device is operated in accordance with this input torque and in accordance with the deceleration demand, wherein the deceleration demand required to operate the clutch device in the disengaging sense is lower at a lower torque than at a higher torque.

2. Mobile industrial machine according to Claim 1, **characterised in that** the hydrodynamic torque converter with an impeller and a turbine wheel is disposed between the clutch device and the prime mover, wherein the input torque is determined from the speed of the impeller, the speed of the turbine wheel and the speed-torque characteristic of the hydrodynamic torque converter.

3. Mobile industrial machine according to Claim 1, **characterised in that** the deceleration demand is determined from a position of a brake pedal or a braking pressure.

4. Method for controlling functions of a mobile industrial machine according to Claim 1, **characterised in that** a deceleration demand is established and the input torque of the clutch device is determined via torque determination means, wherein the clutch device is operated in accordance with this input torque and in accordance with the deceleration demand, wherein the deceleration demand required to operate the clutch device in the disengaging sense is lower at a lower torque than at a higher torque.

5. Method for controlling functions according to Claim 4, **characterised in that** the clutch device is operated in the disengaging sense above a defined deceleration demand and above a defined input torque.

6. Method for controlling functions according to Claim 4, **characterised in that** the input torque is determined when a deceleration demand is detected.

7. Method for controlling functions according to Claim 4, **characterised in that** the clutch device is operated in the disengaging sense with a low deceleration demand when the input torque is low and with a greater deceleration demand when the input torque is higher.

8. Method for controlling functions according to Claim 4, **characterised in that** the deceleration demand is proportional to a brake pedal travel or a braking pressure.

9. Method for controlling functions according to Claim 4, **characterised in that** the input torque is determined when a deceleration demand is first detected, a previously defined deceleration demand is associated with this input torque, the clutch device being operated in the disengaging sense when this is exceeded.

10. Method for controlling functions according to Claim 9, **characterised in that** the deceleration demand is first detected before the service brake is operated.

11. Method for controlling functions according to Claim 4, **characterised in that** a service brake is operated as from a defined deceleration demand.

## Revendications

1. Engin mobile comprenant un moteur d'entraînement qui est en liaison active, d'une part directement avec un consommateur et, d'autre part, avec les roues motrices par l'intermédiaire d'un convertisseur de couple hydrodynamique et d'un dispositif d'embrayage, et comprenant des moyens de décélération à l'aide desquels les roues motrices du véhicule peuvent être décélérées, et un dispositif pour la détermination d'un souhait de décélération, le dispositif d'embrayage étant actionné dans le sens de l'ouverture ou dans le sens de la fermeture selon le souhait de décélération, des moyens de détermination du couple qui déterminent le couple d'entrée du dispositif d'embrayage et un dispositif de commande des fonctions de l'engin, **caractérisé en ce que** le dispositif d'embrayage est actionné en fonction de ce couple d'entrée et en fonction du souhait de décélération, cependant que, pour l'actionnement du dispositif d'embrayage dans le sens de l'ouverture, il suffit d'un plus faible souhait de décélération dans le cas d'un faible couple que dans le cas d'un grand couple.

2. Engin mobile selon la revendication 1, **caractérisé en ce que,** entre le dispositif d'embrayage et le moteur d'entraînement, est disposé le convertisseur de couple hydrodynamique équipé d'une roue de pompe et d'une roue de turbine, le couple d'entrée étant déterminé à partir de la vitesse de rotation de la roue de pompe, de la vitesse de rotation de la roue de turbine et de la caractéristique vitesse de rotation-couple du convertisseur de couple hydrodynamique.

3. Engin mobile selon la revendication 1, **caractérisé en ce que** le souhait de décélération est déterminé à partir d'une position d'une pédale de frein ou à partir d'une pression de frein.

4. Procédé pour la commande des fonctions d'un engin mobile selon la revendication 1, **caractérisé en ce qu'**un souhait de décélération est déterminé et que le couple d'entrée du dispositif d'embrayage est déterminé par l'intermédiaire de moyens de détermination du couple, le dispositif d'embrayage étant actionné en fonction de ce couple d'entrée et en fonction du souhait de décélération, cependant que, pour l'actionnement du dispositif d'embrayage dans le sens de l'ouverture, il suffit d'un plus petit souhait de décélération dans le cas d'un faible couple que dans le cas d'un plus grand couple.

5. Procédé pour la commande de fonctions selon la revendication 4, **caractérisé en ce que** le dispositif d'embrayage est actionné dans le sens de l'ouverture au-dessus d'un souhait de décélération défini et au-dessus d'un couple d'entrée défini.

6. Procédé pour la commande de fonctions selon la revendication 4, **caractérisé en ce que** le couple d'entrée est déterminé lorsqu'un souhait de décélération est détecté.

7. Procédé pour la commande de fonctions selon la revendication 4, **caractérisé en ce que**, dans le cas d'un faible couple d'entrée, le dispositif d'embrayage est actionné dans le sens de l'ouverture en présence d'un faible souhait de décélération et que, dans le cas d'un plus grand couple d'entrée, le dispositif d'embrayage est actionné dans le sens de l'ouverture en présence d'un plus grand souhait de décélération.

8. Procédé pour la commande de fonctions selon la revendication 4, **caractérisé en ce que** le souhait de décélération est proportionnel à une course de la pédale de frein ou à une pression de frein.

9. Procédé pour la commande de fonctions selon la revendication 4, **caractérisé en ce que** le couple d'entrée est déterminé lors d'une première détection d'un souhait de décélération, et qu'à ce couple d'entrée est associé un souhait de décélération préalablement défini lors du dépassement duquel le dispositif d'embrayage est actionné dans le sens de l'ouverture.

10. Procédé pour la commande de fonctions selon la revendication 9, **caractérisé en ce que** la première détection du souhait de décélération se produit avant l'actionnement du frein de service.

11. Procédé pour la commande de fonctions selon la revendication 4, **caractérisé en ce qu'**un frein de service est actionné à partir d'un souhait de décélération défini.
